Europäisches Patentamt

European Patent Office

Office européen des brevets

(19)

(11) Veröffentlichungsnummer: **0 106 981**
**B1**

(12) # EUROPÄISCHE PATENTSCHRIFT

(45) Veröffentlichungstag der Patentschrift:
09.04.86

(51) Int. Cl.⁴: **C 08 G  63/18, C 08 L  67/02**

(21) Anmeldenummer: 83108458.7

(22) Anmeldetag: 27.08.83

(54) Formmassen mit hoher Zähigkeit und Heisswasserbeständigkeit.

(30) Priorität: 25.10.82  DE 3239413

(43) Veröffentlichungstag der Anmeldung:
02.05.84 Patentblatt 84/18

(45) Bekanntmachung des Hinweises auf die Patenterteilung:
09.04.86 Patentblatt 86/15

(84) Benannte Vertragsstaaten:
CH DE FR GB IT LI NL

(56) Entgegenhaltungen:
EP - A - 0 031 469
EP - A - 0 036 062
DE - A - 2 340 559
DE - A - 2 924 895
US - A - 4 012 363

(73) Patentinhaber: **HÜLS AKTIENGESELLSCHAFT,
Patentabteilung / PB 15 - Postfach 13 20,
D-4370 Marl 1 (DE)**

(72) Erfinder: **Horlbeck, Gernot, Dr., In der Thiebrei 80,
D-4358 Haltern (DE)**
Erfinder: **Burzin, Klaus, Dr., Wellerfeldweg 164,
D-4370 Marl (DE)**

## Beschreibung

Gegenstand der Erfindung sind Formmassen mit hoher Zähigkeit und Heißwasserbestindigkeit bestehend aus Copolyestern auf Basis von Poly(butylenterephthalat).

Poly(butylenterephthalat) ist in unverstärkter und verstärkter Form ein wertvoller Konstruktionswerkstoff mit einer Reihe herausragender Eigenschaften wie hoher Steifigkeit, Oberflächenhärte, Abriebfestigkeit, guter Wärmeformbeständigkeit, Dimensionsstabilität und schneller Verarbeitbarkeit im Spritzgieß- oder Extrusionsverfahren zu komplizierten und großen Formteilen.

Ein deutlicher Nachteil solcher Formteile aus Poly(butylenterephthalat) ist die relativ geringe Kerbschlagzähigkeit, wodurch die Anwendungsbreite dieser Formmassen erheblich eingeschränkt ist. Es besteht daher die Notwendigkeit, Poly(butylenterephthalat) so zu modifizieren, daß eine höhere Zähigkeit des Werkstoffes erreicht wird.

Bisher wurden zahlreiche Vorschläge gemacht, durch Einkondensieren von aliphatischen Dicarbonsäuren in Poly(butylenterephthalat) kerbschlagzähe Formmassen herzustellen. So beschreibt DE-OS 26 51 560 Copolyester aus Terephthalsäure, Butandiol-(1.4) und einer verzweigten gesättigten aliphatischen Dicarbonsäure mit 7 bis 30 Kohlenstoffatomen im Molekül. In der DE-OS 28 29 624 werden Copolyester aus Terephthalsäure, Butandiol-(1.4) und einem Gemisch aus Adipin-, Glutar- und Bernsteinsäure als Spritz-guß- bzw. Extrusionsmassen mit hoher Zähigkeit verwendet. Die DE-OS 27 07 852 beschäftigt sich mit der Zähigkeitsverbesserung von Poly(butylenterephthalat) durch Abmischung mit Copolyestern aus Terephthalsäure, Butandiol-(1.4) und einer aliphatischen Dicarbonsäure mit bis zu 34 Kohlenstoffatomen im Molekül. Verstärkte Formmassen auf der Basis von Copolyestern des Poly(butylenterephthalats), die durch Einkondensieren von linearen aliphatischen Dicarbonsäuren mit 4 bis 40 C-Atomen gebildet werden, sind Gegenstand der DE-OS 29 24 895.

All diesen durch die Verwendung aliphatischer Dicarbonsäuren als Cokomponenten modifizierten Poly(butylenterephthalat)-Formmassen haftet der wesentliche Nachteil an, daß sie im Vergleich zum Homopolyester zwar eine verbesserte Kerbschlagzähigkeit besitzen, jedoch eine drastisch verringerte Steifigkeit aufweisen und deutliche Einbußen in der Beständigkeit gegen heißes Wasser zeigen.

Aufgabe der Erfindung war es, unter Aufrechterhalten der guten Grundeigenschaften des Homopolyesters die Kerbschlagzähigkeit der Formmassen zu verbessern.

Die Aufgabe wurde durch Formmassen aus Copolyestern auf Basis von Poly(butylenterephthalat) gelöst, die als Cokomponente 5 bis 25 Mol-% - bezogen auf den Gesamtdiolanteil des Copolyesters - eines linearen $\alpha,\omega$-Alkandiols mit 6 bis 20 C-Atomen in der Kohlenstoffkette enthalten und die eine Viskositätszahl (J) von $> 120$ cm³/g (gemessen in einer Lösung von 0,23 g Copolyester in 100 ml Phenol/1.1.2.2-Tetrachlorethan (60/40 Gew-Teile) bei 25 °C) besitzen.

Geeignete $\alpha,\omega$-Alkandiole sind beispielsweise: Hexan-diol-(1.6), Heptandiol-(1.7), Octandiol-(1.8), Nonan-diol-(1.9), Decandiol-(1.10), Dodecandiol-(1.12) und Hexadecandiol-(1.16); bevorzugt werden Decandiol-(1.1O) und Dodecandiol-(1.12) verwendet. Das $\alpha,\omega$-Alkandiol ist zu 5 bis 25 Mol-% in dem Copolyester enthalten, vorzugsweise sind 7,5 bis 20 Mol-%, insbesondere 10 bis 15 Mol-%, einkondensiert. Die Angaben in Mol-% beziehen sich auf den Gesamtdiolanteil.

Das $\alpha,\omega$-Alkandiol enthält 6 bis 20 C-Atome, vorzugsweise 8 bis 16 C-Atome, insbesonder 10 bis 12 C-Atome, in der Kohlenstoffkette.

Als weitere Komponenten enthält der Copolyester Reste der Terephthalsäure und des Butan-diols-(1.4).

Die Herstellung der Copolyester erfolgt analog der Herstellung von Poly(butylenterephthalat), wie sie beispielsweise in Sorensen und Campell, Preparative Methods of Polymer Chemistry, Interscience NY 1961, S. 111 bis 127, in Kunststoffhandbuch, Band 8 (polyester), C. Hanser Verlag München 1973, S. 697 bzw. in Journal of Polymer Science, Part A 1, 4, 1851 bis 1859 (1966), beschrieben wird. Dabei werden Terephthalsäure oder ihre polyesterbildenden Derivate, beispielsweise die niedermolekularen Dialkylester mit 1 bis 4 Kohlenstoffatomen im Molekül, mit Butandiol-(1.4) und einem erfindungsgemäßen $\alpha,\omega$-Alkan-diol in einer inerten Atmosphäre in Gegenwart von Katalysatoren unter Entfernung des entstehenden Wassers bzw. Alkanols bei 150 bis 220 °C, vorzugsweise bei 170 bis 200 °C, um- bzw. verestert. Anschließend wird bei 230 bis 270 °C, vorzugsweise bei 240 bis 260 °C, unter vermindertem Druck (ca. 0,2 bis 1 mbar) die Polykondensation durchgeführt.

Die Diole werden in Bezug auf Terephthalsäure im überschuß eingesetzt, wobei das Molverhältnis Diole/Säure(derivat) 1,25 bis 2, vorzugweise 1,35 bis 1,6, beträgt. Werden flüchtigere Diole wie z.B. Hexandiol-(1.6) oder Heptan-diol-(1.7) als Codiole verwendet, werden diese in der Reaktionsmischung in einem größeren überschuß verwendet, damit im fertigen Copolyester der gewünschte Codiolanteil erreicht wird. Bei Verwendung längerkettiger Diole mit hohem Siedepunkt wird die molare Einsatzmenge entsprechend dem gewünschten Molanteil im fertigen Copolyester gewählt.

Bevorzugtes polyesterbildendes Derivat der Terephthalsäure ist der Dimethylester; die inerte Atmosphäre ist vorzugsweise eine Stickstoffatmosphäre; als Katalysatoren werden vorzugsweise organische Verbindungen des Titans, insbesondere Titantetraisopropylat, eingesetzt.

Sofern erforderlich, wird eine Festphasennachkondensation durchgeführt (GB-PS 10 66 162, US-PS 34 05 098), um die gewünschte hohe Viskositätszahl zu erreichen. Dies geschieht in der Weise, daß der Polyester in Granulat- oder Pulverform auf Temperaturen gebracht wird, die etwa 10 bis 60 °C, vorzugsweise 15 bis 40 °C, unterhalb des Schmelzpunktes liegen. In diesem Temperaturbereich wird der Copolyester so lange in einem Inertgasstrom, z. B. im Stickstoff-Strom, oder unter Vakuum behandelt, bis die gewünschte Viskosität erreicht ist.

Erfindungsgemäß besitzen die Copolyester eine Viskositätszahl (J) von > 120 cm³/g, vorzugsweise von 125 bis 150 cm³/g.

Die erfindungsgemäßen Copolyester-Formmassen können Hilfsund Zusatzstoffe enthalten. Hierfür kommen z. B. Nukleierungs-, Mattierungs-, Fließmittel oder andere Verarbeitungsmittel, Stabilisatoren gegen thermischen, thermooxidativen und hydrolytischen Abbau sowie Pigmente, Füll- und Verstärkungsstoffe o. a. in Frage.

In erster Linie werden die erfindungsgemäßen Copolyester als solche zur Herstellung von Formmassen verwendet. Gegebenenfalls können sie auch mit reinem Poly(butylenterephthalat) abgemischt werden, um die Eigenschaften von letzterem zu verbessern.

Im Vergleich zu Produkten des Standes der Technik weisen die erfindungsgemäßen Copolyester-Formmassen eine verbesserte Zähigkeit bei gleichzeitiger hoher Steifigkeit und verbesserte Heißwasserbeständigkeit auf. Diese Eigenschaftskombination konnte nach den bisherigen Kenntnissen nicht erwartet werden.

Die in der Beschreibung und in den Beispielen angeführten Parameter wurden mit Hilfe der nachstehend genannten Meß-methoden bestimmt:

Als Schmelzpunkt ($T_m$) wird das durch Differential-Thermocalorimetrie (DSC) ermittelte Schmelzmaximum des Copolyesters bezeichnet (Aufheizgeschwindigkeit 16 °C/min).

Die Viskositätszahl (J) wurde an Lösungen von 0,23 g Copolyester in 100 ml Phenol/1.1.2.2-Tetrachlorethan (Gewichtsverhältnis 60:40) bei 25 °C gemessen.

Die Kerbschlagzahigkeit wird gemäß DIN 53 453 bestimmt.

Die Grenzbiegespannung (als Maß für die Steifigkeit) wird nach DIN 53 452 bestimmt.

Die Hydrolysestabilität der Copolyester wird durch die Abnahme der Viskositätszahl (J) nach einer 24-stündigen Behandlung des feingemahlenen Materials mit 130 °C heißem Wasser in einem Drucktopf charakterisiert.

Der Viskositätsabbau wird als prozentuale Abnahme der Viskositätszahl durch die Hydrolyse angegeben:

$$\frac{J_O - J_{Hydr}}{J_O} \times 100$$

($J_O$: Ausgangsviskositätszahl, $J_{Hydr}$: Viskositätszahl nach dem Hydrolysetest).

Die mit Buchstaben gekennzeichneten Versuche sind nicht erfindungsgemäß.

## Beispiele

### Versuche 1 bis 4

In einem 100 1-Kessel werden 38,8 kg (200 Mol) Dimethylterephthalat mit 300 Mol Diolgemisch (Zusammensetzung ge-maß Tabelle 1) und 15 g Titantetraisopropylat als Katalysator in einem schwachen Stickstoffstrom zunächst 3 Stunden bei 160° C, dann 2 Stunden bei 200° C bis zur Abdestillation der theoretisch zu erwartenden Methanolmenge unter Rühren umgeestert.

Darauf wird im Verlauf von 2 Stunden Wasserstrahlvakuum angelegt, in weiteren 1,5 Stunden wird dann das Reaktionsgemisch unter Rühren auf 250 °C aufgeheizt. Diese Bedingungen werden 30 Minuten gehalten, anschließend wird ein Vakuum < 1 mbar angelegt, und das Reaktionsgemisch bis zu einer Viskositätszahl (J) von 80 bis 100 cm³/g polykondensiert. Nach Aufheben des Vakuums mit $N_2$ wird die Schmelze in Strangform ausgetragen, in Wasser gekühlt, granuliert und getrocknet.

Der Polyesteraustrag beträgt ca. 45 kg Granulat. Dieses Granulat wird in einem 500 l-Taumeltrockner im Wasserstrahlvakuum bei den in Tabelle 1 angegebenen Temperaturen in 15 Stunden bis zu Viskositätszahlen von 125 bis 150 cm³/g nachkondensiert.

### Versuche A bis E

Nach dem unter Versuche 1 bis 4 beschriebenen Verfahren werden Copolyester aus 200 Mol Dimethylterephthalat und freier aliphatischer Dicarbonsäure (Molverhältnis vgl. Tabelle 1), 300 Mol Butandiol-(1.4) mit Titantetraisopropylat (15 g) als Katalysator durch Schmelzpolykondensation hergestellt und durch Festphasennachkondensation auf Viskositätszahlen von 125 bis 150 cm³/g gebracht.

### Versuch F

Ein Copolyester der Zusammensetzung entsprechend Versuch 3 wird nach dem angegebenen Verfahren mit einer Viskositätszahl von 100 cm³/g hergestellt; die Kerbschlagzähigkeit beträgt 7 kJ/m$^2$.

Tabelle 1

| Versuch | Diolgemisch [Mol] | Zusammensetzung Copolyester [Mol-%] | J [cm$^3$/g] | $T_m$ [°C] |
|---|---|---|---|---|
| 1 | BD/HD = 255/45 | TS//BD/HD = 100//85/15 | 130 | 204 |
| 2 | BD/DD-1.10 = 270/30 | TS//BD/DD-1.10 = 100//85/15 | 137 | 205 |
| 3 | BD/DD-1.12 = 270/30 | TS//BD/DD-1.12 = 100//85/15 | 142 | 205 |
| 4 | BD/DD-1.12 = 280/20 | TS//BD/DD-1.12 = 100//90/10 | 140 | 208 |
| | Säure(derivate)gemisch [Mol] | | | |
| A | DMT/AS = 170/30 | TS/AS//BD = 85/15//100 | 145 | 209 |
| B | DMT/SS = 170/30 | TS/SS//BD = 85/15//100 | 141 | 208 |
| C | DMT/DDS = 170/30 | TS/DDS//BD = 85/15//100 | 138 | 206 |
| D | DMT/DDS = 180/20 | TS/DDS//BD = 90/10//100 | 140 | 214 |
| E | DMT/AZS = 180/20 | TS/AZS//BD = 90/10//100 | 133 | 213 |

Bedeutung der Abkürzungen:

BD     : Butandiol-(1.4)
HD     : Hexandiol-(1.6)
DD-1.10: Decandiol-(1.10)
DD-1.12: Dodecandiol-(1.12)
DMT    : Dimethylterephthalat

TS : Terephthalsäure
AS : Adipinsäure
SS : Sebacinsäure
DDS: Dodecandisäure
AZS: Azelainsäure

Tabelle 2

| Versuch | Kerbschlagzähigkeit $[kJ/m^2]$ | Grenzbiegespannung $[N/mm^2]$ | Viskositätsabbau $[\%]$ |
|---|---|---|---|
| 1 | 17 | 68 | 55 |
| 2 | KB *) | 60 | 51 |
| 3 | KB | 59 | 49 |
| 4 | 18 | 67 | 45 |
| A | 24 | 50 | 81 |
| B | KB | 30 | 85 |
| C | KB | 30 | 82 |
| D | KB | 45 | 78 |
| E | 11 | 48 | 78 |

*) KB: Kein Bruch

**Patentansprüche:**

1. Formmassen mit hoher Zähigkeit und Heißwasserbeständigkeit bestehend aus Copolyestern auf Basis von Poly(butylenterephthalat), die als Cokomponente 5 bis 25 Mol-% - bezogen auf den Gesamtdiolanteil des Copolyesters - eines linearen α,ω-Alkandiols mit 6 bis 20 C-Atomen in der Kohlenstoffkette enthalten und die eine Viskositätszahl (J) von > 120 cm³/g (gemessen in einer Lösung von 0,23 g Copolyester in 100 ml Phenol/1.1.2.2-Tetrachlorethan (60/40 Gew.-Teile) bei 25 °C) besitzen.

2. Formmassen gemäß Anspruch 1 bestehend aus Copolyestern auf Basis von Poly(butylenterephthalat), das im Anschluß an die Herstellung nachkondensiert wurde.

3. Verwendung von Copolyestern auf Basis von Poly(butylenterephthalat), die als Cokomponente 5 bis 25 Mol-%bezogen auf den Gesamtdiolanteil des Copolyesterseines linearen α,ω-Alkandiols mit 6 bis 20 C-Atomen in der Kohlenstoffkette enthalten und die eine Viskositätszahl (J) von > 120 cm³/g (gemessen in einer Lösung von 0,23 g Copolyeeter in 100 ml Phenol/I.I.2.2-Tetrachlorethan (60/40 Gew.-Teile) bei 25°C) besitzen, als Formmassen mit hoher Steifigkeit und Heißwasserbeständigkeit.

**Claims**

1. A moulding composition of improved toughness and hot-water stability comprising a copolyester based on poly(butylene terephthalate) containing as co-component 5 to 25 mol%, based on the total diol moiety of the copolyester, of a linear α,ω-alkanediol of 6 to 20 carbon atoms in the carbon chain and having a viscosity number (J) of more than 120 cm³/g (measured in a solution of 0.23 g copolyester in 100 ml of a 60/40 mixture weight basis, of phenol/1,1,2,2-tetrachloroethane at 25°C).

2. A moulding composition according to claim 1, comprising a copolyester based on poly(butylene terephthalate) which has been post-condensed in connection with its production.

3. The use of a copolyester based on poly(butylene terephthalate), which contains as co-component 5 to 25 mol% based on the total diol moiety of the copolyester of a linear α,φ-alkanediol of 6 to 20 carbon atoms in the carbon chain and which has a viscosity number (J) of more than 120 cm³/g (measured in a solution of 0.23 g copolyester in 100 ml of a 60/40 mixture, weight basis, of phenol/1,1,2,2-tetrachloroethane at 25°C), as a moulding material of improved stiffness and hot-water stability.

**Revendications**

1. Matières à mouler de grande ténacité et de grande résistance à l'eau chaude, formée de copolyesters à base de poly-(téréphtalate de butylène) qui contiennent comme co-constituant 5 à 25 mol%, relativement à la proportion totale de diol du copolyester, d'un alpha,oméga-alcane-diol linéaire contenant de 6 à 20 atomes de carbone dans la chaîne carbonée, et qui présentent un indice de viscosité (J) de plus de 120 cm³/g (mesuré dans une solution de 0,23 g de copolyester dans 100 ml d'un mélange de phénol et de 1,1,2,2,-tétrachloré-thane (60/40 parties en poids) à 25°C).

2. Matières à mouler selon la revendication 1, formée de copolyesters à base de poly-(téréphtalate de butyléne) que l'on a post-condensés à la suite de la préparation.

3. L'utilisation, comme matiéres à mouler de grande rigidité et de grande résistance à l'eau chaude, de copolyesters à base de poly-(téréphtalate de butyléne) qui contiennent comme co-constituant de 5 à 25 mol%, relativement à la proportion totale de diol du copolyester, d'un alpha, omégaalcane-diol linéaire contenant de 6 à 20 atomes de carbone dans la chaîne carbonée, et qui présentent un indice de viscosité (J) de plus de 120 cm³/g (mesuré dans une solution de 0,23 g de copolyester dans 100 ml) d'un mélange de phénol et de 1,1,2,2,-tétrachlorethane (60/40 parties en poids) à 25°C).